Europäisches Patentamt

European Patent Office

Office européen des brevets

(11) Veröffentlichungsnummer: **0 553 454 B1**

(12) **EUROPÄISCHE PATENTSCHRIFT**

(45) Veröffentlichungstag der Patentschrift: **26.07.95**

(21) Anmeldenummer: **92121026.6**

(22) Anmeldetag: **10.12.92**

(51) Int. Cl.⁶: **C09C 1/30**, C08K 3/36, C08K 13/02, //(C08K13/02,3:36, 5:13)

(54) Haftpromotor für Kautschuk- und Kunststoffmischungen.

(30) Priorität: **25.01.92 DE 4202023**

(43) Veröffentlichungstag der Anmeldung:
**04.08.93 Patentblatt 93/31**

(45) Bekanntmachung des Hinweises auf die Patenterteilung:
**26.07.95 Patentblatt 95/30**

(84) Benannte Vertragsstaaten:
**AT BE CH DE DK ES FR GB GR IE IT LI LU MC NL PT SE**

(56) Entgegenhaltungen:
**DE-C- 1 301 478**

(73) Patentinhaber: **Degussa Aktiengesellschaft Weissfrauenstrasse 9 D-60311 Frankturt (DE)**

(72) Erfinder: **Meier, Karl Roisdorfer Weg 5 W-5305 Alfter (DE)**
Erfinder: **Görl, Udo, Dr. Herderstrasse 38 W-5303 Bornheim-Roisdorf (DE)**
Erfinder: **Wolff, Siegfried, Dr. Weiherstrasse 28 W-5303 Bornheim-Merten (DE)**

**Beschreibung**

Die Erfindung betrifft aus Resorcin und Kieselsäure bestehende Abmischungen, die als Haftpromoter in Kautschuk- und Kunststoffmischungen eingesetzt werden und die dazu verwendbaren Kieselsäuren.

Es ist bekannt, zur Verbesserung der Haftung zwischen textilen Festigkeitsträgern (Polyamid, Aramid, Cellulose, Polyester) oder Stahlcord (blank, verzinkt, vermessingt) und Gummi Haftverstärker einzusetzen.

Bei der direkten Zugabe der Haftverstärker zur Rohkautschukmischung (dry bonding) stehen zwei Möglichkeiten zur Verfügung. Bei Stahlcord (z. B. Stahlgürtel in Reifen, Hochdruckschläuche, Fördergurte mit Stahleinlage) finden Anwendung die zweiwertigen Salze des Cobalts (z. B. Cobaltnaphthenat) oder Resorcin/Formaldehyd/Kieselsäuresysteme, während bei Textilcord nur das letztere System zur Anwendung kommt.

Beide Systeme besitzen unterschiedlich geartete Nachteile (Cobaltsystem: schlechtes Alterungsverhalten, Kautschukgift/Resorcin/Formaldehyd-System: Sublimationsverhalten des Resorcins, Toxizität, schlechte Dispergierbarkeit).

Am Anfang der Entwicklung des Resorcin/Formaldehyd/Kieselsäuresystems bestand das Problem des schlechten Dispergierverhaltens von Resorcin, das sich nur durch eine Einmischtemperatur von ca. 120 °C (Schmelzpunkt von Resorcin) verbessern läßt. Diese hohen Temperaturen werden jedoch in der Praxis nicht von allen Mischungen erreicht.

Eine Möglichkeit, dieses Problem zu lösen, besteht in der feinen Vermahlung von Resorcin mit Kieselsäure, wie sie im deutschen Patent 1301478 (Degussa Haftsystem Cofill®11) beschrieben wird oder der Vermahlung von Resorcin mit Stearinsäure. Darüberhinaus wurde versucht, durch eine geeignete Mischtechnik und Mischaggregate die Dispergierung von Resorcin zu verbessern und so Resorcin aus Preisgründen in Reinform einzusetzen.

Mit diesem Maßnahmen konnten jedoch nicht die aus der Sublimationsneigung des Resorcins herrührenden Probleme beseitigt werden, wie sie bei den für die Herstellung von Kautschuk- und Kunststoffartikeln notwendigen Temperaturen auftreten.

Da in der Praxis nicht exakt feststellbar ist, wieviel von dem der Mischung zugesetzten Resorcin durch Sublimation verdampft, sind starke Schwankungen und Inhomogenitäten in den Haftwerten nicht zu vermeiden.

Außerdem ist die Belästigung der Beschäftigten durch das sublimierende Resorcin zu beachten.

Resorcin, insbesondere Resorcindämpfe gelten als gesundheitsschädlich. Sie wirken reizend auf das Atemsystem und führen zu Augen- und Hautirritationen (aus British Rubber Manufacturers Association Ltd., Toxicity and Safe Handling of Rubber Chemicals, Third Edition 1990). Die Gummiindustrie fordert daher von den Resorcinherstellern bzw. den Herstellern von Haftsystemen auf Resorcinbasis verstärkt Maßnahmen, die der Sublimationsneigung von Resorcin entgegenwirken. Eine Entwicklung, die diesem Problem Abhilfe schaffen soll, ist die Verwendung von sogenannten Resocinvorkondensaten. Hierbei wird durch eine gezielte Umsetzung von Resorcin mit einem geeigneten Formaldehydspender außerhalb der eigentlichen Mischungsherstellung ein Resorcinharz gebildet.

Durch diese gezielte Molekulargewichtserhöhung des Resorcins (aus dem monomeren Grundkörper wird di-, tri- und oligomeres Resorcin) wird das Sublimationsverhalten des Resorcins stark herabgesetzt. Bei der eigentlichen Anwendung dieses höhermolekularen Resorcins in Gummi wird dann zusammen mit einem weiterem Formaldehydspender das eigentliche für die Haftung Cord und Gummi notwendige Resorcin-Formaldehydharz-Netzwerk aufgebaut.

Die nach oben genannten Verfahren hergestellten Vorkondensate besitzen jedoch neben dem hohen Preis einige gravierende technische Nachteile. Durch die teilweise Besetzung der reaktiven Zentren des Resorcins für die Verharzung während der Vorkondensation nimmt die Reaktivität für die eigentliche Resorcin-Formaldehydharzbildung in der Gummimischung gegenüber der Reaktivität von freiem Resorcin wesentlich ab. Dies äußert sich in einer deutlichen Zunahme der Vulkanisationsgeschwindigkeit, einem gegenüber Resorcin deutlich niedrigeren Modul und einer niedrigeren Härte sowie niedrigeren Haftwerten, besonders auf blankem Stahlcord. Diese technischen Mängel stehen einem wachsenden Einsatz von Vorkondensaten in der Gummiindustrie entgegen.

Aufgabe der Erfindung ist es, eine Anwendungsform für Resorcin in Haftmischungen bereitzustellen, bei dem die Wirksamkeit im Vergleich zum Stand der Technik nicht leidet, die aber gleichzeitig zu einem deutlich eingeschränkten Sublimationsverhalten des Resorcins führt.

Gegenstand der Erfindung sind zu 5 bis 95 Gew.-% aus Resorcin und 95 bis 5 Gew.-% aus gefällter Kieselsäure bestehende Abmischungen, die dadurch gekennzeichnet sind, daß die verwendete Kieselsäure in wäßriger Suspension einen pH-Wert von >8 aufweist (DIN 53200). Ihre spezifische Oberfläche (bestimmt nach BET mit Stickstoff gemäß ISO 5794/1 Annex D) liegt vorteilhaft zwischen 30 und 1000 $m^2/g$,

insbesondere 125 und 250 m$^2$/g.

Die Abmischungen werden in bekannten Mischaggregaten hergestellt, kontinuierlich oder diskontinuierlich. In einer vorteilhaften Ausführungsform überführt man diese als Pulver vorliegenden Abmischungen gemäß dem in der DE-OS 4013258 beschriebenen Verfahren in die Granulatform

Dies bringt den weiteren Vorteil mit sich, daß man dann mit einem besonders staubarmen Produkt arbeiten kann.

Besonders vorteilhaft sind Abmischungen mit einem Gehalt von 30 bis 70 Gew.-% Resorcin und 70 bis 30. Gew.-% Kieselsäure.

In den Abmischungen gemäß den Ansprüchen 1 oder 2 einsetzbare Kieselsäure ist dadurch gekennzeichnet, daß man die Kieselsäure zuerst nach an sich bekannten Verfahren aus einer Wasserglaslösung mit Schwefelsäure ausfällt, abfiltriert und auswäscht (Na$_2$SO$_4$-Gehalt < 0,5 %) dann den Filterkuchen, der einen sauren pH-Wert aufweist, mit unter Einbringung von Scherenergie verdünnter Natronlauge verflüssigt, den gewünschten pH-Bereich von vorzugsweise 9 bis 10 einstellt, und anschließend aus der Suspension eine sprühgetrocknete Kieselsäure oder durch erneutes Abfiltrieren und Trocknen die gewünschte Kieselsäure gewinnt, wobei der Entwassergehalt im allgemeinen bei 4 bis 7 %, vorzugsweise bei 4,5 bis 6,5 % liegt.

Die Konzentration der Natronlauge liegt im allgemeinen zwischen 20 und 50 %, insbesondere 25 bis 35 %. Man setzt sie dem Filterkuchen bei einer Temperatur von im allgemeinen 20 bis 40 °C zu, bis ein pH-Wert von 8 bis 10 erreicht und im bevorzugten Fall die Sprühfähigkeit der so erhaltenen Suspension gewährleistet ist.

Die Konsistenz des mit Natronlauge aufgenommenen Filterkuchens beläuft sich insbesondere auf 18 bis 21 Gew.-% Feststoff, bezogen auf die Gesamtmenge der Suspension.

Das Verfahren zum Granulieren ist dadurch gekennzeichnet, daß Abmischungen von 5 bis 95 Gew.-% Resorcin und 5 bis 95 Gew.-% gefällter Kieselsäure durch Förderschnecken zu zwei Preßwalzen transportiert werden, deren Achsen senkrecht übereinander angebracht sind und deren Anpreßdruck variiert werden kann, dort kompaktiert, anschließend mit Hilfe eines Fladenbrechers ein Granulat mit der gewünschten maximalen Korngröße gewonnen und der verbleibende staubförmige Anteil abgetrennt wird.

Der Anpreßdruck der Walzen, deren Oberfläche glatt oder strukturiert sein kann, wird im allgemeinen auf Werte zwischen 6 und 105 bar, insbesondere von 6 bis 25 bar, eingestellt.

Im Hinblick auf die Sublimationsneigung zeigt ein Vergleich zwischen den Resorcinvorkondensaten und den erfindungsgemäßen Abmischungen zwar ein ähnliches Verhalten, bei der Anwendung in Gummimischern erweist es sich jedoch, daß sich die erfindungsgemäßen Abmischungen durch deutlich höhere Vulkanisationsgeschwindigkeiten, durch einen höheren Modul, höhere Härte und bessere Haftwerte, besonders auf blankem Stahlcord auszeichnen.

Die erfindungsgemäß hergestellten Abmischungen (als Pulver oder Granulat) finden Anwendung in vulkanisierbaren Kautschukmischungen, die Resorcin und Kieselsäure enthalten, den sogenannten Haftmischungen. Beispielhaft genannt sind die in der DE-PS 1078 320 und bei Sprung, J., Burmester,K., (Kautschuk und Gummi, 33 (1980) 611-616) beschriebenen Mischungen. Diese enthalten 1 bis 10 Gew.-Teile, bevorzugt 1,5 bis 5 Gew.-Teile Resorcin, bezogen auf 100 Gew.-Teile Kautschuk.

Die Haftverstärkung basiert auf der Bildung eines Resorcin/Formaldehyd-Harzes. Hierzu muß die Mischung, neben der erfindungsgemäßen Resorcin/Kieselsäure Abmischung (pH-Wert >8) zusätzlich einen Formaldehydspender (z. B. Hexa K von Degussa oder Cohedur® A von BAYER) in Mengen von 0,5 bis 10 GT, bevorzugt 1 bis 3 GT, enthalten. Darüberhinaus ist es für eine gute Haftung, besonders an Stahlcord, notwendig, daß sich in der Kautschuk- oder Kunststoffmischung insgesamt Kieselsäuren, wie sie für diese Anwendung bekannt sind, in einer Menge von 1 bis 50 Gew.-Teilen, insbesondere von 10 bis 25 Gew.-Teilen befindet, jeweils bezogen auf 100 Gew.-Teile Kautschuk.

Zu den geeigneten Kautschukarten zählen mit Schwefel sowie Vulkanisationsbeschleuniger(n) zu Elastomeren vernetzbare Kautschuke und deren Gemische. Insbesondere sind dies die halogenfreien Kautschukarten, vorzugsweise sogenannte Dien-Elastomere. Zu diesen Kautschukarten zählen beispielsweise ölgestreckte, natürliche und synthetische Kautschuke wie Naturkautschuke, Butadienkautschuke, Isoprenkautschuke, Butadien-Styrol-Kautschuke, Butadien-Acryl-nitril-Kautschuke, Butylkautschuke, Terpolymere aus Ethylen, Propylen und nicht konjugierte Diene. Ferner kommen für Kautschukgemische mit den genannten Kautschuken die folgenden zusätzlichen Kautschuke in Frage:

Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propyl-Copolymere, gegebenenfalls auch chemische Derivate des Naturkautschuks sowie modifizierte Naturkautschuke.

Desweiteren können die mit der erfindungsgemäßen Resorcin/Kieselsäure-Amischung versehenen Kautschukmischungen weitere in der Kautschukindustrie übliche Komponenten enthalten, wie z. B. (GT = Gewichtanteile):

- übliche Verstärkungssysteme, d. h. Furnace-Ruße, Channel-Ruße, Flammruße, Thermalruße, Acetylenruße, Lichtbogenruße, CK-Ruße usw., sowie synthetische Füllstoffe wie Kieselsäuren, Silikate, Aluminiumoxidhydrate, Calciumcarbonate und natürliche Füllstoffe wie Clays, Kieselkreiden, Kreiden, Talkum usw. sowie silanmodifizierte Füllstoffe,
- übliche in der Kautschukindustrie verwendete Vulkanisationsbeschleuniger (z. B. Sulfenamide, Mercaptobenzthiazole, Mercaptobenzothiazyldisulfide, Triazinbeschleuniger, Thiurame) alleine oder im Gemisch in Mengen von 0,1 bis 10 Gew.-Teilen, bezogen auf 100 Gew.-Teile Kautschuk.
- Vulkanisationsverzögerer, wie z. B. Vulkalent E: (N-trichlormethylthiophenylsulfonyl)-benzol, PVI: N-(Cyclohexylthio)phthalimid, ebenfalls in Mengen von 0,1 bis 10 Gew.-Teilen, bezogen auf 100 Gew.-Teile Kautschuk.
- ZnO und Sterinsäure als Promotor der Vulkanisation in Mengen von 0,5 bis 10 Gew.-Teilen, bezogen auf 100 Teile Kautschuk.
  In der Kautschuk-Industrie verwendete Alterungs-, Ozon-, Ermüdungs-Schutzmittel, wie z. B. IPPD: N-Isopropyl-N-phenyl-p-phenylendiamin, TMQ: 2,2,4-Trimethyl-1,2-dihydrochinolin, sowie auch Wachse als Lichtschutzmittel und deren Verschnitte.
- Beliebige Weichmacher, wie z. B. aromatische, naphthenische, paraffinische, synthetische Weichmacher und deren Verschnitte.
- Gegebenenfalls Silane, wie z. B. Bis-(3-triethoxysilylpropyl)tetrasulfan,
  - Chlorpropyltriethoxysilan,
  - Mercaptopropyltrimethoxysilan,Vinyltrialkoxysilane und deren Verschnitte in einer Menge von 0,1 bis 20 Gew.-Teilen, bevorzugt 1 bis 10 Gew.-Teile, je 100 Gew.-Teile Kieselsäure.
- Gegebenenfalls Schwefel in einer Menge von 0,1 bis 10 Gew.-Teilen je 100 Gew.-Teile Kautschuk.
- Gegebenenfalls Farbstoffe und Verarbeitungshilfsmittel in der üblichen Dosierung.
  Die Mischungsherstellung erfolgt in der in der Gummiindustrie bekannten Art und Weise in einem Innenmischer oder auf einem Walzwerk.

Der Anwendungsbereich der erfindungsgemäßen Abmischungen erstreckt sich auf Haftmischungen, wie sie üblicherweise im Reifenbau, z. B. im Gürtel-, Karkass- und Wulstring-ßereich eingesetzt werden, sowie auf technische Artikel mit Festigkeitsträgern aus Textil- oder Stahlcord, also z. B. Fördergurte, Keilriemen, Schläuche, z. T. Dichtungen und gummibeschichtete Gewebe.

Die erfindungsgemäß hergestellten Abmischungen zeigen praktisch keine Sublimationsneigung mehr. Mit ihnen hergestellte Kautschukvulkanisate zeigen gegenüber mit Resorcinvorkondesaten hergestellten Vulkanisaten deutlich bessere, insbesondere gummitechnische Hafteigenschaften.

Beispiele

Beispiel 1

Kontinuierliche Herstellung der Abmischung Resorcin/Kieselsäure

100 kg/h Kieselsäure (pH = 9, 175 m$^2$/g) und 100 kg Resorcin gelangen gravimetrisch in den Gericke-Mischer. Über eingebaute Mischwendeln, die mit einer Drehzahl von 120 UPM rotieren, werden die beiden Komponenten homogenisiert. Nach einer Verweilzeit von 40 sec. verläßt das Mischgut über eine Hohlschnecke den Mischer und wird der weiteren Verarbeitung zugeführt.

Beispiel 2

Diskontinuerliche Herstellung der Abmischung Resorcin/Kieselsäure

In einem mit Wendelröhre versehenen Kegelstumpfmischer der Firma ALPINE werden jeweils 150 kg Kieselsäure (pH =9, 175 m$^2$/g) und 150 kg Resorcin eingetragen und anschließend 30 min. gemischt. Nach Ablauf der Homogenisierungszeit wird das fertige Mischgut aus dem Mischer ausgetragen und der weiteren Verarbeitung zugeführt.

Beispiel 3

Vergleich des Sublimationsverhaltens von Resorcin/Ultrasil VN 3 1 : 1- und Resorcin/Kieselsäure (pH = 9) 1 : 1 Abmischungen

In einer Sublimationsapparatur mit wassergekühltem Sublimationsfinger werden nacheinander 100 mg einer Resorcin/Ultrasil VN 3 (pH = 6,2) Abmischung und 100 mg einer Resorcin/Kieselsäure (pH = 9) Abmischung bei 150 °C insgesamt 3 h erhitzt. Während dieser Zeit konnte eine Abscheidung von sublimiertem Resorcin am Kühlfinger beobachtet werden. Die jeweils nach 60 min. mittels Auswiegen durchgeführte Bestimmung der abgeschiedenen Resorcinmenge ergab nach 3 h bei beiden Abmischungen Gewichtskonstanz. Folgende Mengen an Sublimat in Prozent konnten nach dieser Zeit ausgewogen werden:

| Resorcin/Ultrasil VN3 (Cofill 11) | 39 % |
| Resorcin/Kieselsäure (pH = 9) | 1 % |

Die Ergebnisse zeigen, daß erfindungsgemäße Abmischungen praktisch sublimationsfrei sind.

Die nach dieser Analysemethode gefundene Sublimatmenge liegt im Größenbereich von Resorcinvorkondensaten, wie z. B. Penacolite B 20 S (max. 2 % freies Resorcin, Angabe des Herstellers) und ist deutlich niedriger als die von herkömmlichen Resorcinabmischungen oder natürlich Resorcin selbst.

In den Anwendungsbeispielen werden folgende Namen, Prüfnormen und Abkürzungen benutzt:

Prüfnormen für die Anwendung

| | Prüfmethode | Einheit |
|---|---|---|
| $D_{max}$- $D_{min}$ | DIN 53529 | Nm |
| Spannungswert 300 % | DIN 53504 | MPa |
| Shore-A-Härte | DIN 53505 | |
| Haftung (blanker Stahlcord) | in einer Länge von 1 cm einvulkanisierter Stahlcord wird an der Zugdehnungsmaschine ausgerissen (N/cm) | |

Verwendete Materialien:

| | |
|---|---|
| RSS1 | ribbed smoked sheet (Naturkautschuk) |
| Natsyn®2200 | Polyisoprenkautschuk |
| CORAX®N 330 | Ruß, Oberfläche,(BET: 82 m$^2$/g) Degussa |
| Ultrasil®VN3 | gefällte Kieselsäure, Oberfläche 175 m$^2$/g, pH : 6.2 |
| Naftolen®ZD | aromatischer Weichmacher |
| Vulkanox®HS | 2,2,4-Trimethyl-1,2-dihydrochi nolin BAYER |
| Hexa K | Hexamethylentetramin Degussa |
| Vulkacit®DZ | Benzothiazyl-2-dicyclohexyl-sulfenamid |
| Cofill®11 | pulverförmige Abmischung aus Resorcin/VN 3 50:50 Degussa |
| Crystex®OT 20 A | unlöslicher Schwefel |
| Penacolite B 20 S | Resorcinvorkondensat der Firma Inspec mit einem Gehalt an freiem Resorcin von ca. 2 % |
| Kieselsäure | pH : 9, spez. Oberfläche 175 (m$^2$/g) |

Beispiel 4:

Gummitechnischer Vergleich zwischen einer Haftmischung mit Resorcinvorkondensat und einer erfindungsgemäßen 1 : 1 Abmischung

|  | 1 | 2 |
|---|---|---|
| RSS 1 | 30 | 30 |
| Natsyn 2200 | 70 | 70 |
| CORAX N 330 | 45 | 45 |
| Ultrasil VN 3 | 15 | 12,5 |
| ZnO RS | 8 | 8 |
| Stearinsäure | 1 | 1 |
| Naftolen ZD | 3 | 3 |
| Vulkanox HS | 1 | 1 |
| Penacolite B 20 S | 2,5 | – |
| 1:1 Resorcin/Kiesel-säure pH = 9 | – | 5 |
| Hexa K | 1,5 | 1,5 |
| Vulkacit DZ | 0,7 | 0,7 |
| Crystex OT 20 A | 5 | 5 |

Rheometerdaten: 145 $^{0}$C,

| $D_{max}-D_{min}$ NM | 13,2 | 13,93 |
|---|---|---|
| T 95 % | 73,8 | 68,7 |
| T 90- t 10 % | 53,4 | 48,9 |

Vulkanisationsdaten: 145 $^{0}$C, T 95 %

| Modul 300 % MPa | 13,7 | 17,3 |
|---|---|---|
| Härte | 78 | 82 |

Haftung blanker Stahlcord
(Mittelwert aus 10 Messungen)

|  N/cm | 83 | 124 |
|---|---|---|

**Patentansprüche**

1. Aus 5 bis 95 Gew.-% Resorcin und 95 bis 5 Gew.-% gefällter Kieselsäure bestehende Abmischungen, wobei die Kieselsäure dadurch gekenzeichnet ist, daß man sie zuerst nach an sich bekannten Verfahren aus einer Wasserglaslösung mit Schwefelsäure ausfällt, abfiltriert, dann den Filterkuchen, der einen sauren ph-Wert aufweist, mit verdünnter Natronlauge verflüssigt, um den gewünschten pH-Bereich zu erreichen, und anschließend aus der Suspension eine sprühgetrocknete Kieselsäure oder durch erneutes Abfiltrieren und Trocknen die gewünschte Kieselsäure gewinnt, die in 5 %-iger wäßriger Suspension einen pH-Wert von >8 aufweist.

2. Abmischungen gemäß Anspruch 1 dadurch gekennzeichnet, daß sie in granulierter Form vorliegen.

6

3. In den Abmischungen gemäß Anspruch 1 oder 2 einsetzbare Kieselsäure,
dadurch gekennzeichnet, daß man die Kieselsäure zuerst nach an sich bekannten Verfahren aus einer Wasserglaslösung mit Schwefelsäure ausfällt, abfiltriert, dann den Filterkuchen, der einen sauren pH-Wert aufweist, mit verdünnter Natronlauge verflüssigt, um den gewünschten pH-Bereich zu erreichen, und anschließend aus der Suspension eine sprühgetrocknete Kieselsäure oder durch erneutes Abfiltrieren und Trocknen die gewünschte Kieselsäure gewinnt, die in 5 %-iger wäßriger Suspension einen pH-Wert von >8 aufweist.

4. Kieselsäure gemäß Anspruch 3,
dadurch gekennzeichnet, daß sie eine spezifische Oberfläche von 30 bis 1000 m$^2$/g besitzt.

5. Verwendung der Abmischungen gemäß den Ansprüchen 1 oder 2 in vulkanisierbaren neben Beschleunigern gegebenenfalls Ruß, weiterer Kieselsäure und weiteren üblichen Bestandteilen Formaldehydspender enthaltende Kautschukhaftmischungen,
dadurch gekennzeichnet, daß diese 1 bis 10 Gew.-Teile, bevorzugt 1,5 bis 5 Gew.-Teile Resorcin, bezogen auf 100 Gew.-Teile Kautschuk, enthält.

**Claims**

1. Mixtures consisting of 5 to 95% by weight of resorcinol and 95 to 5% by weight of precipitated silica, the silica being characterized in that it is first precipitated from a waterglass solution with sulfuric acid by methods known per se and filtered off, after which the filter cake, which has an acidic pH value, is liquified with dilute sodium hydroxide to establish the required pH range and a spray-dried silica is obtained from the suspension or the required silica, which has a pH value of >8 in the form of a 5% aqueous suspension, is obtained by re-filtration and drying.

2. Mixtures as claimed in claim 1, characterized in that they are present in granulated form.

3. Silica useable in the mixtures claimed in claim 1 or 2, characterized in that the silica is first precipitated from a waterglass solution with sulfuric acid by methods known per se and filtered off, after which the filter cake, which has an acidic pH value, is liquified with dilute sodium hydroxide to establish the required pH range and a spray-dried silica is obtained from the suspension or the required silica, which has a pH value of >8 in the form of a 5% aqueous suspension, is obtained by re-filtration and drying.

4. Silica as claimed in claim 3, characterized in that it has a specific BET surface of 30 to 1,000 m$^2$/g.

5. The use of the mixtures claimed in claim 1 or 2 in vulcanizable adhesive rubber compounds optionally containing carbon black, more silica and other typical constituents in addition to accelerators, characterized in that the mixtures contain 1 to 10 parts by weight and preferably 1.5 to 5 parts by weight of resorcinol per 100 parts by weight of rubber.

**Revendications**

1. Mélanges constitués par 5 à 95 % en poids de résorcine et par 95 à 5 % en poids de silice précipitée, la silice étant caractérisée en ce qu'on la précipite d'abord selon des procédés connus en soi à partir d'une solution de verre soluble avec de l'acide sulfurique, en ce qu'on la sépare par filtration, en ce qu'on fluidifie ensuite le gâteau de filtre, qui présente un pH acide, à l'aide de lessive de soude caustique diluée pour atteindre la plage de pH désirée et en ce qu'on prépare ensuite à partir de la suspension une silice séchée par pulvérisation ou en ce qu'on obtient ensuite la silice désirée par une nouvelle filtration et un séchage, ladite silice présentant un pH supérieur à 8 dans une suspension aqueuse à 5 %.

2. Mélanges selon la revendication 1, caractérisés en ce qu'ils sont sous forme granulée.

3. Silices pouvant être utilisées dans les mélanges selon la revendication 1 ou 2, caractérisées en ce qu'on les précipite d'abord selon des procédés connus en soi à partir d'une solution de verre soluble avec de l'acide sulfurique, en ce qu'on la sépare par filtration, en ce qu'on fluidifie ensuite le gâteau de filtre, qui présente un pH acide, à l'aide de lessive de soude caustique diluée pour atteindre la plage de pH désirée et en ce qu'on prépare ensuite à partir de la suspension une silice séchée par pulvérisation ou en ce qu'on obtient ensuite la silice désirée par une nouvelle filtration et un séchage, ladite silice présentant un pH supérieur à 8 dans une suspension aqueuse à 5 %.

4. Silice selon la revendication 3, caractérisée en ce qu'elle présente une surface spécifique comprise entre 30 et 1000 m$^2$/g.

5. Utilisation des mélanges selon les revendications 1 ou 2 dans des mélanges adhérents de caoutchoucs vulcanisables contenant en outre des accélérateurs, le cas échéant du noir de carbone, d'autres silices et d'autres composants usuels ainsi qu'un dispensateur de formaldéhyde, caractérisés en ce qu'ils contiennent 1 à 10 parties en poids, de préférence 1,5 à 5 parties en poids, de résorcine par rapport à 100 parties en poids de caoutchouc.